# EUROPÄISCHE PATENTSCHRIFT

(11) **EP 1 048 509 B1**
(45) Veröffentlichungstag und Bekanntmachung des Hinweises auf die Patenterteilung: **03.11.2004**
(21) Anmeldenummer: 00108590.1
(22) Anmeldetag: 20.04.2000
(51) Int. Cl.: B60N 2/22, B60N 2/48, B60N 2/225, B60N 2/427

(54) **Kraftfahrzeugsitz**
Automotive vehicle seat
Siège de voiture automobile

(30) Priorität: 30.04.1999 DE 19919698
(43) Veröffentlichungstag der Anmeldung: 02.11.2000
(73) Patentinhaber: KEIPER GmbH & Co. KG, 67657 Kaiserslautern (DE)
(72) Erfinder: Armbrust, Karl-Peter, 67715 Geiselberg (DE); Dubois, Dirk, 76846 Hauenstein (DE); Maier, Jürgen, 67808 Weitersweiler (DE)
(74) Vertreter: Patentanwälte Hosenthien-Held und Dr. Held

(56) Entgegenhaltungen:
- DE-A- 2 952 064
- DE-A- 19 726 800
- GB-A- 2 318 045
- PATENT ABSTRACTS OF JAPAN vol. 1998, no. 09, 31. Juli 1998 (1998-07-31) & JP 10 086720 A (NISSAN MOTOR CO LTD), 7. April 1998 (1998-04-07)

## Beschreibung

Die Erfindung betrifft einen Fahrzeugsitz, insbesondere einen Kraftfahrzeugsitz, mit den Merkmalen des Oberbegriffs des Anspruches 1.

Aus der DE 197 26 800 A1 ist ein Fahrzeugsitz bekannt, bei dem das Lehnenoberteil mittels zweier Gelenkbeschläge am Lehnenunterteil angebracht ist und in seiner Neigung einstellbar ist. Die GB 2 318 045 A offenbart einen Fahrzeugsitz der eingangs genannten Art, bei dessen Struktur ein Lehnenoberteil mittels einfacher Gelenke an einem Lehnenunterteil angelenkt ist und im Crahsfall nach vorne schwenkt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß das Lehnenoberteil im Crashfall nach vorne schwenkt, kommt der Nacken- und Kopfbereich des Sitzbenutzers in Anlage an das Lehnenoberteil bzw. die darauf aufgesetzte oder integrierte Kopfstütze. Dies schützt den Sitzbenutzer besser vor Verletzungen, insbesondere vor dem sogenannten HWS-Syndrom. Besonders wichtig wird dies, wenn die Rückenlehne als Ganzes stark nach hinten geneigt ist.

Beim Normalgebrauch ist das Lehnenoberteil in seiner Neigung relativ zum Lehnenunterteil einstellbar und damit an die individuellen Wünsche des Sitzbenutzers anpaßbar. In konstruktiv einfacher Ausführung ist das Lehnenoberteil über wenigstens einen Gelenkbeschlag am Lehnenunterteil angebracht. Hierfür kommen beispielsweise bekannte Rastbeschläge oder Getriebebeschläge in Frage. Der verwendete Gelenkbeschlag weist eine Freischwenkfunktion auf, die im Crashfall ausgelöst wird. Beispielsweise durch eine Federbelastung kann dann das Lehnenoberteil rasch nach vorne schwenken. Die Erfindung kann bei allen Arten von Fahrzeugsitzen eingesetzt werden, beispielsweise auch bei Kraftfahrzeug-Rücksitzbänken oder bei Fluggastsitzen.

Die Schwenkbewegung des Lehnenoberteils wird vorzugsweise durch einen Anschlag begrenzt, beispielsweise auf 30°. Die vorzugsweise vorgesehene Feder kann auch Bewegungsenergie des Sitzbenutzers aufnehmen und dadurch Belastungsspitzen vermeiden. Die Auslösung der Schwenkbewegung des Lehnenoberteils im Crashfall kann je nach Trägheit der Teile durch einen Sensor oder mechanisch erfolgen.

Im folgenden ist die Erfindung anhand zweier in der Zeichnung dargestellter Ausführungsbeispiele näher erläutert. Es zeigen
- Fig. 1: eine Teilansicht der Vorderseite der Sitzstruktur des ersten Ausführungsbeispiels,
- Fig. 2: einen Schnitt entlang der Linie II-II in Fig. 1,

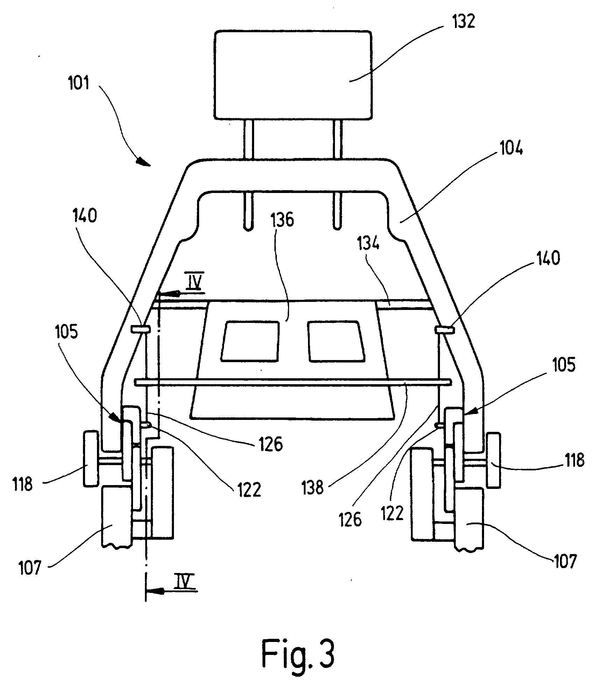

- Fig. 3: eine Teilansicht der Vorderseite der Sitzstruktur des zweiten Ausführungsbeispiels, und

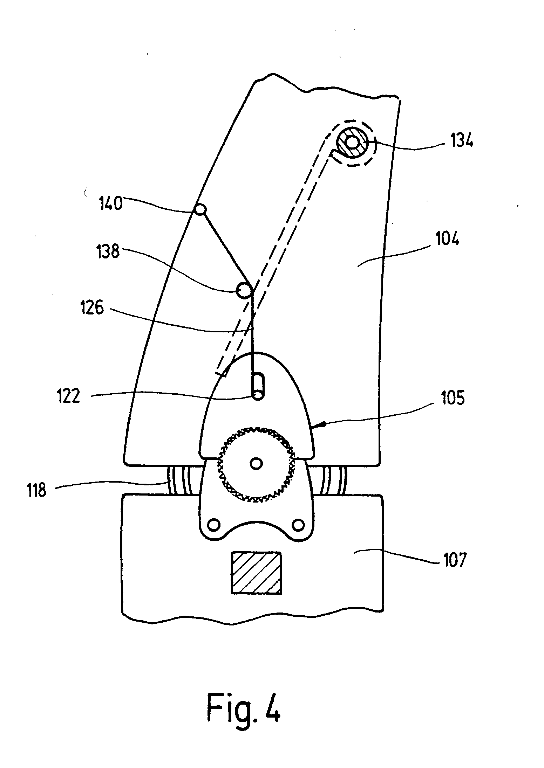

- Fig. 4: einen Schnitt entlang der Linie II-II in Fig. 3.

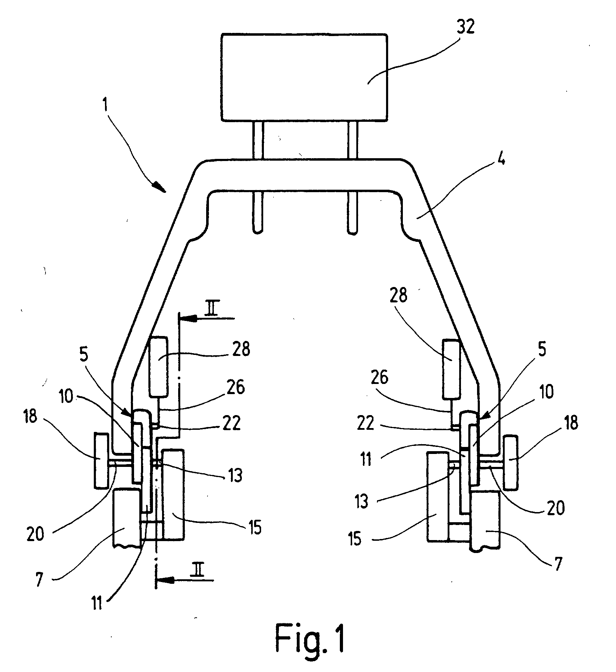

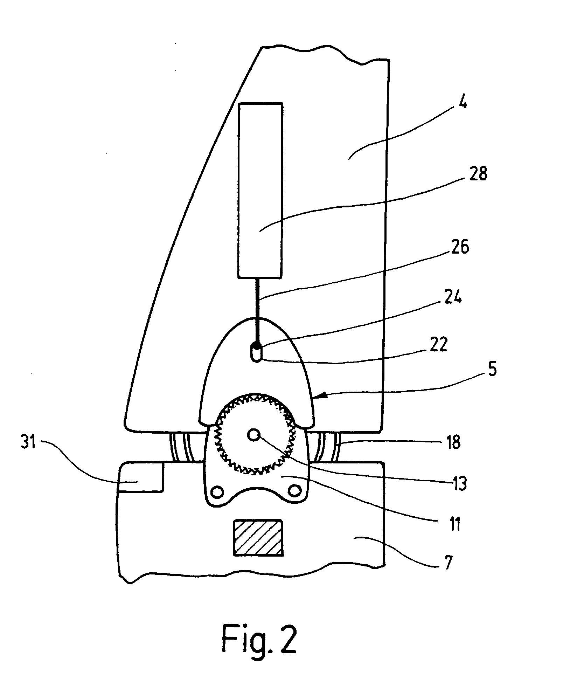

Beim ersten Ausführungsbeispiel weist ein Fahrzeugsitz für ein Kraftfahrzeug, von dem in den Figuren 1 und 2 nur die Sitzstruktur 1 ohne Polsterung dargestellt ist, eine in waagrechter Richtung geteilte Rückenlehne auf. Ein Lehnenoberteil 4 ist über zwei Gelenkbeschläge 5, von denen einer auf der linken Seite und einer spiegelbildlich dazu auf der rechten Seite der Sitzstruktur 1 angeordnet ist, an einem Lehnenunterteil 7 angelenkt. Lehnenoberteil 4 und Lehnenunterteil 7 erstrecken sich über die gesamte Breite der Rückenlehne. Jeder Gelenkbeschlag 5 weist ein Beschlagoberteil 10 und ein Beschlagunterteil 11 auf, wobei das Beschlagoberteil 10 mit dem Lehnenoberteil 4 und das Beschlagunterteil 11 mit dem Lehnenunterteil 7 verbunden ist. Das Beschlagoberteil 10 ist um eine Achse 13 relativ zum Beschlagunterteil 11 verdrehbar. Die Achsen 13 beider Gelenkbeschläge 5 fluchten miteinander.

Durch synchrones Verdrehen der Beschlagoberteile 10 relativ zu den jeweiligen Beschlagunterteilen 11 läßt sich das Lehnenoberteil 4 in seiner Neigung relativ zum Lehnenunterteil 7 einstellen und an den Sitzbenutzer individuell anpassen. Hierfür ist auf jeder Seite der Sitzstruktur 1 ein Elektromotor 15 am Lehnenunterteil 11 auf der Innenseite angeordnet und an die Achse 13 angeschlossen. Die beiden vorgesehenen Elektromotoren 15 sind durch eine entsprechende, nicht dargestellte Schaltung aufeinander abgestimmt. Statt der Elektromotoren 15 kann für eine Handbetätigung ein Handrad sowie eine Übertragungsstange zwischen den Achsen 13 vorgesehen sein.

Die verwendeten Gelenkbeschläge 5 sind auf bekannte Weise mit einer Freischwenkfunktion ausgestattet. Ferner ist bei jedem Gelenkbeschlag 5 auf der vom Elektromotor 15 abgewandten Außenseite eine Spiralfeder 18 angeordnet, die um einen Zapfen 20 des Gelenkbeschlags 5 gewickelt ist und mit ihrem inneren Ende an diesem Zapfen 20 befestigt ist, während ihr äußeres Ende am Lehnenoberteil 4 angebracht ist.

Die Freischwenkfunktion des Gelenkbeschlags 5 wird durch Zug an einem Bolzen 22 ausgelöst, der vom Beschlagoberteil 10 seitlich nach innen absteht und in einer nach oben verlaufenden Kulisse 24 geführt ist. Am Bolzen 22 ist ein Zugseil 26 angebracht, welches in eine oberhalb des Beschlagoberteils 10 am Lehnenoberteil 4 angebrachte Betätigungsvorrichtung 28 geführt ist. Diese weist beispielsweise eine gespannte Druckfeder auf, an der das Zugseil 26 eingehängt ist und die durch eine elektromagnetisch lösbare Sperre in diesem gespannten Zustand gehalten wird.

Im Crashfall wird durch einen nicht dargestellten Beschleunigungssensor auf jeder Seite der Sitzstruktur 1 die Betätigungsvorrichtung 28 gleichzeitig ausgelöst, beispielsweise bei einem Frontalcrash, wenn der Sitzbenutzer nach vorne geschleudert wird, oder bei einem Heckcrash, wenn der Sitzbenutzer in den Fahrzeugsitz gedrückt wird. Die Betätigungsvorrichtung 28 zieht über das Zugseil 26 am Bolzen 22, welcher sich innerhalb der Kulisse 24 nach oben bewegt und die Freischwenkfunktion des Gelenkbeschlags 5 auslöst. Durch die Kraft der Spiralfeder 18 wird das Beschlagoberteil 10 und damit das Lehnenoberteil 4 rasch nach vorne geschwenkt. Die Schwenkbewegung des Lehnenoberteils 4 wird durch einen Anschlag 31 begrenzt, der beispielsweise am Lehnenunterteil 7 vorgesehen ist. Durch das Vorschwenken des Lehnenoberteils 4 bewegt sich auch eine am oberen Ende des Lehnenoberteils 4 befestigte Kopfstütze 32 nach vorne.

Nach seiner Vorwärtsbewegung fällt der Sitzbenutzer nach hinten. Er trifft dann auf die vorgeschwenkte Kopfstütze 32, so daß diese ihre bestimmungsgemäße Aufgabe zum Schutz des Genicks erfüllen kann. Da die Kraft auf die Kopfstütze 32 über das Lehnenoberteil 4 auf die Spiralfeder 18 wirkt, kann diese einen Teil der Energie aufnehmen, welche der Sitzbenutzer überträgt. Die Kopfstütze 31 ist vorzugsweise leicht nach hinten geneigt in einem Winkel von etwa 60° bis 90° zur Waagrechten. Das Lehnenoberteil 4 kann nach dem Vorschwenken in dieser vorderen Stellung verriegelbar sein. Das Lehnenoberteil 4 kann aber auch so ausgebildet sein, daß es nach dem Aufnehmen des nach hinten fallenden Sitzbenutzers in einer hinteren Stellung verriegelt wird.

Das zweite Ausführungsbeispiel stimmt weitgehend mit dem ersten Ausführungsbeispiel überein. Die Bezugszeichen für gleiche und für gleich wirkende Teile sind daher um 100 höher gewählt. Die beiden Ausführungsbeispiele unterscheiden sich darin, daß statt der Betätigungsvorrichtung 28 mit der elektromagnetisch lösbaren Sperre eine rein mechanische Betätigungsvorrichtung vorgesehen ist.

Hierfür ist im Lehnenoberteil 104 der Sitzstruktur 101 mittels einer waagrecht verlaufenden Wippenachse 134 eine Wippe 136 drehbar gelagert. Die Wippe 136, welche sich über einen großen Teil der Breite des Lehnenoberteils 104 erstreckt, weist eine waagrechte Betätigungsstange 138 auf. Von jedem Gelenkbeschlag 105 steht, wie im vorigen Ausführungsbeispiel, ein Bolzen 122 zur Auslösung der Freischwenkfunktion ab. An diesem Bolzen 122 ist ein Ende eines Zugseils 126 befestigt. Das andere Ende des Zugseils 126 ist über einem oberhalb des Bolzens 122 angeordneten Befestigungszapfen 140 am Lehnenoberteil 104 befestigt. Die senkrecht zum Zugseil 126 verlaufende Betätigungsstange 138 liegt am Zugseil 126 auf dessen nach vorne gewandten Seite an.

Im Crashfall drückt der Sitzbenutzer beim Zurückfallen mit seiner Schulterpartie gegen die Wippe 136. Diese schwenkt um die Wippenachse 134 nach hinten. Die Betätigungsstange 138 zieht zugleich auf beiden Seiten am jeweiligen Zugseil 126, wodurch über den Bolzen 122 die Freischwenkfunktion des Gelenkbeschlags 105 ausgelöst wird. Durch die Kraft der Spiralfedern 118 schwenkt das Lehnenoberteil 104 gegenüber dem Lehnenunterteil 107 nach vorne und nimmt die Kopfstütze 132 vor. Der Kopf des Sitzbenutzers gelangt dann in Anlage an die nach vorne bewegte Kopfstütze 132, entsprechend dem vorigen Ausführungsbeispiel.

### Bezugszeichenliste

- 1: Sitzstruktur (erstes Ausführungsbeispiel)
- 4: Lehnenoberteil
- 5: Gelenkbeschlag
- 7: Lehnenunterteil
- 10: Beschlagoberteil
- 11: Beschlagunterteil
- 13: Achsen
- 15: Elektromotor
- 18: Spiralfeder
- 20: Zapfen
- 22: Bolzen
- 24: Kulisse
- 26: Zugseil
- 28: Betätigungsvorrichtung
- 31: Anschlag
- 32: Kopfstütze
- 101: Sitzstruktur (zweites Ausführungsbeispiel)
- 104: Lehnenoberteil
- 105: Gelenkbeschlag
- 107: Lehnenunterteil
- 118: Spiralfedern
- 122: Bolzen
- 126: Zugseil
- 132: Kopfstütze
- 134: Wippenachse
- 136: Wippe
- 138: Betätigungsstange
- 140: Befestigungszapfen

## Patentansprüche

1. Fahrzeugsitz, insbesondere Kraftfahrzeugsitz, mit einer Sitzstruktur (1; 101), bei der ein Lehnenoberteil (4; 104) relativ zu einem Lehnenunterteil (7; 107) schwenkbar ist und im Crashfall nach vorne schwenkt wobei das Lehnenoberteil (4; 104) über wenigstens einen Gelenkbeschlag (5; 105) am Lehnenunterteil (7; 107) angebracht ist, **dadurch gekennzeichnet, daß** das Lehnenoberteil (4; 104) beim Normalgebrauch in seiner Neigung relativ zum Lehnenunterteil (7; 107) einstellbar ist, wobei der Gelenkbeschlag (5; 105) eine Freischwenkfunktion aufweist, die im Crashfall ausgelöst wird.

2. Fahrzeugsitz nach Anspruch 1, **dadurch gekennzeichnet, daß** das Lehnenoberteil (4; 104) gegenüber dem Lehnenunterteil (7; 107) federbelastet ist.

3. Fahrzeugsitz nach Anspruch 1 oder 2, **dadurch gekennzeichnet, daß** ein Anschlag (31) die Schwenkbewegung des Lehnenoberteils (4; 104) begrenzt.

4. Fahrzeugsitz nach einem der Ansprüche 1 bis 3, **dadurch gekennzeichnet, daß** die Auslösung der Schwenkbewegung des Lehnenoberteils (4) im Crashfall durch einen Sensor erfolgt.

5. Fahrzeugsitz nach einem der Ansprüche 1 bis 3, **dadurch gekennzeichnet, daß** die Auslösung der Schwenkbewegung des Lehnenoberteils (104) im Crashfall mechanisch erfolgt.

## Claims

1. Vehicle seat, in particular motor vehicle seat, having a seat structure (1; 101) in which an upper backrest member (4; 104) can be pivoted relative to a lower backrest member (7; 107) and pivots forwards in the event of a crash, the upper backrest member (4; 104) being fitted to the lower backrest member (7; 107) by means of at least one articulation fitting (5; 105), **characterised in that** the upper backrest member (4; 104) can be adjusted in terms of its inclination relative to the lower backrest member (7; 107) during normal use, the articulation fitting (5; 105) having a free pivot function which is activated in the event of a crash.

2. Vehicle seat according to claim 1, **characterised in that** the upper backrest member (4; 104) is resiliently loaded relative to the lower backrest member (7; 107).

3. Vehicle seat according to claim 1 or 2, **characterised in that** a stop (31) limits the pivot movement of the upper backrest member (4; 104).

4. Vehicle seat according to any one of claims 1 to 3, **characterised in that** the activation of the pivot movement of the upper backrest member (4) is effected by a sensor in the event of a crash.

5. Vehicle seat according to any one of claims 1 to 3, **characterised in that** the activation of the pivot movement of the upper backrest member (104) is effected mechanically in the event of a crash.

## Revendications

1. Siège de véhicule, en particulier siège de véhicule automobile, comprenant une structure de siège (1 ; 101), dans laquelle une partie supérieure de dossier (4 ; 104) peut être amenée à pivoter par rapport à une partie inférieure de dossier (7 ; 107) et s'incline vers l'avant en cas d'accident, la partie supérieure de dossier (4 ; 104) étant montée sur la partie inférieure de dossier (7 ; 107) au moyen d'au moins une ferrure d'articulation (5 ; 105), **caractérisé par le fait que** la partie supérieure de dossier (4 ; 104) peut être réglée en inclinaison par rapport à la partie inférieure de dossier (7 ; 107) dans l'utilisation normale, la ferrure d'articulation (5 ; 105) présentant une fonction de pivotement libre qui est déclenchée en cas d'accident.

2. Siège de véhicule selon la revendication 1, **caractérisé par le fait que** la partie supérieure de dossier (4 ; 104) est sollicitée élastiquement par rapport à la partie inférieure de dossier (7 ; 107).

3. Siège de véhicule selon l'une des revendications 1 ou 2, **caractérisé par le fait qu'**une butée (31) limite le mouvement de pivotement de la partie supérieure de dossier (4 ; 104).

4. Siège de véhicule selon l'une des revendications 1 à 3, **caractérisé par le fait que** le déclenchement du nouvement de pivotement de la partie supérieure de dossier (4) en cas d'accident est exécuté par un capteur.

5. Siège de véhicule selon l'une des revendications 1 à 3, **caractérisé par le fait que** le déclenchement du mouvement de pivotement de la partie supérieure de dossier (104) en cas d'accident est exécuté mécaniquement.
